# EUROPÄISCHE PATENTANMELDUNG

(11) **EP 0 705 553 A1**
(43) Veröffentlichungstag der Anmeldung: **10.04.1996**
(21) Anmeldenummer: 94113171.6
(22) Anmeldetag: 03.10.1994
(51) Int. Cl.: A47J 31/40

(54) **Variable Kaffeemehl-Portionierer**

(71) Anmelder: Lahrmann, Tomislav, D-47226 Duisburg (DE)
(72) Erfinder: Lahrmann, Tomislav, D-47226 Duisburg (DE)

(57) **Zusammenfassung**

Der variable Kaffeemehlportionierer besteht aus einem Behälter (1) zum Aufnehmen von Kaffeemehl. Eine obere, zum Einfüllen von Kaffeemehl geeignete, öffnung des Behälters (1) ist durch eine obere Abdeckplatte (2) abschließbar. Die Unterseite des Behälters (1) ist mit einem Meßrohr (5) verbunden. Dieses Meßrohr (5) ist an beliebigen Stellen durch eine Absperrplatte (3) absperrbar. An der Unterseite des Meßrohrs (5) ist eine untere Verschlußklappe (4) angeordnet, wodurch die gewünschte Kaffeemehlmenge entnommen werden kann.

## Beschreibung

Die Erfindung bezieht sich auf die Mechanik eines Portionieres. Der Kaffeemehlportionierer besteht aus einem Gehaeuse (Behaelter) einem Messrohr (Abfuellrohr) einer Verschlussklappe und einer Absperrvorichtung.

Der Vorteil des Portionieres besteht darin, das das Kaffeemehl in beliebigen Portionen (Tassen) in einem Arbeitsvorgang abgefuellt werden kann.

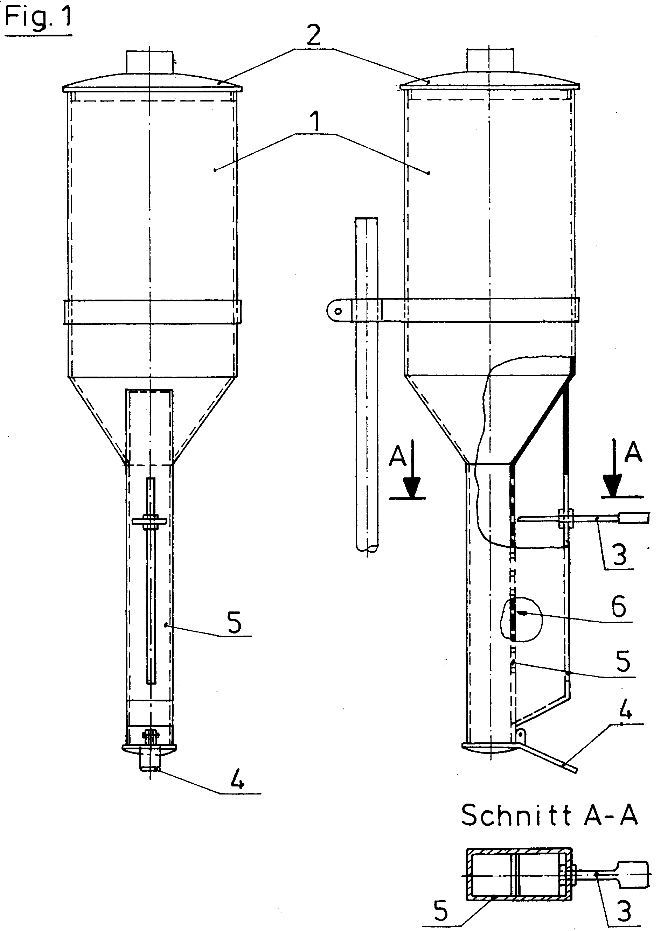

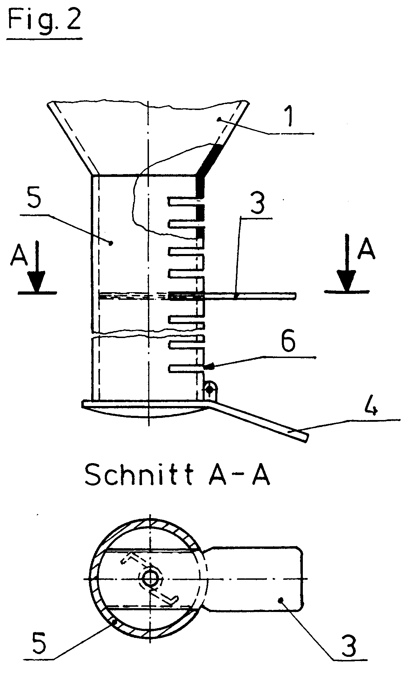

Fig.1 zeigt den Kaffeemehlportionierer als ganzes.

### Aufbau:

Der Kaffeemehlportionierer besteht aus einem Behaelter zur Aufnahme des Kaffeemehls, das durch die ober Abdeckklappe eingefuellt wird. Das Kaffeemehl rutscht dann automatisch nach unten in das absperrbare Messrohr.Nun kann das Messrohr an beliebigen Stellen durch die Absperrplatte blockiert werden,so das nun durch oeffnen der unteren Verschlussklappe die gewuenschte Kaffeemehlmenge entnommen werden kann.

## Patentansprüche

1. Variabler Kaffeemehlportionierer Blatt 1
Gehaeuse (1)
obere Einfuell -und Abdeckklappe (2)
Absperrplatte rund oder eckig (3)
untere Verschlussklappe rund oder eckig (4)
Messrohr rund oder eckig (5)
Zum Messrohr (5) muss gesagt werden,das es rund oder eckig sein kann. Das absperren des runden Messrohres (5) erfolgt durch eine runde Absperrplatte (3).
Die Absperrplatte (3) Schnitt A-A ist in sich verschiebbar,und so in der Lage durch die Messrohroeffnungen (6) ins innere des Rohres eingeschoben zu werden und dieses dann zu verschliessen.
Dadurch ist gewaehrleistet das durch oeffnen der unteren Verschlussklappe (4) die gewuenschte Kaffeemehlmenge entnommen werden kann. Das selbe gilt auch fuer ein eckiges Messrohr (5) Schnitt A-A.
